# EUROPÄISCHE PATENTSCHRIFT

(11) **EP 2 038 620 B1**
(45) Veröffentlichungstag und Bekanntmachung des Hinweises auf die Patenterteilung: **19.02.2020**
(21) Anmeldenummer: 07726160.0
(22) Anmeldetag: 26.06.2007
(51) Int. Cl.: G01F 23/26, G01F 23/284, G01F 23/296, G01L 19/00, G01D 11/24

(54) **FELDGERÄT MIT INTEGRIERTER SOLARENERGIEERZEUGUNG**
FIELD DEVICE WITH INTEGRATED SOLAR ENERGY PRODUCTION
ÉQUIPEMENT DE TERRAIN À PRODUCTION D'ÉNERGIE SOLAIRE INTÉGRÉE

(30) Priorität: 12.07.2006 DE 102006032250; 12.07.2006 US 830228 P
(43) Veröffentlichungstag der Anmeldung: 25.03.2009
(73) Patentinhaber: VEGA Grieshaber KG, 77709 Wolfach (DE)
(72) Erfinder: STAIGER, Holger, 78730 Lauterbach (DE)
(74) Vertreter: Schäflein, Christian Georg
(86) Internationale Anmeldenummer: PCT/EP2007/005657
(87) Internationale Veröffentlichungsnummer: WO 2008/006463

(56) Entgegenhaltungen:
- EP-A- 1 482 285
- WO-A-2005/116787
- WO-A-2006/020813
- WO-A1-02/063252
- DE-A-102004 009 032
- DE-A1- 10 015 619
- DE-A1- 19 726 044
- DE-C1- 4 336 334
- GB-A- 2 017 320
- US-A- 5 224 379
- US-A- 6 125 697

## Beschreibung

Die vorliegende Anmeldung beansprucht die Priorität der US Provisional Patentanmeldung Nr. 60/830,228, eingereicht am 12. Juli 2006, und der deutschen Patentanmeldung Nr. 10 2006 032 250.9, eingereicht am 12. Juli 2006.

### Technisches Gebiet

Die vorliegende Erfindung betrifft die Energieversorgung für Feldgeräte. Insbesondere betrifft die vorliegende Erfindung eine Energieversorgungseinheit für ein Feldgerät zum Messen eines Drucks oder eines Füllstandes, ein Feldgerät mit einer solchen Energieversorgungseinheit, die Verwendung einer Energieversorgungseinheit für ein Feldgerät und ein Verfahren zur Energieversorgung für ein solches Feldgerät.

### Hintergrund der Erfindung

Füllstandmessgeräte und Druckmessgeräte werden über einen entsprechenden Anschluss extern mit Energie versorgt. Eine derartige Energieversorgung kann beispielsweise über ein 2-Leitersystem erfolgen, über welches auch der Datenaustausch erfolgt. Weiterhin können Energiespeicher innerhalb des Feldgeräts vorgesehen sein, um das Feldgerät unabhängig von einer externen Energieversorgung zu machen. Allerdings müssen diese Energiespeicher dann in regelmäßigen, relativ kleinen Zeitabständen ausgewechselt oder extern geladen werden.

Eine externe Energieversorgung erfordert entsprechende Anschlüsse am Feldgerät und eine externe Versorgungsstation, welche am Feldgerät angeschlossen ist. Hierdurch wird der Einsatzbereich des Feldgerätes eingeschränkt.

US 6,125,697 A beschreibt eine Vorrichtung und ein Verfahren zur Messung einer Flüssigkeitsmenge in einem Reservoir. Das Messgerät weist eine Solarzelle und eine Batterie zur Energieversorgung auf. Die Solarzelle ist in einem Gehäuse integriert. Weiter ist ein Regulator vorgesehen, der ein Entladen der Batterie durch den Regulator verhindern soll, wenn die Solarzelle nicht aktiv ist.

### Darstellung der Erfindung

Es ist eine Aufgabe der vorliegenden Erfindung, eine verbesserte Energieversorgung für ein Feldgerät bereitzustellen.

Gemäß der vorliegenden Erfindung ist ein Feldgerät zum Messen eines Drucks und eines Füllstandes gemäß den Merkmalen des Anspruchs 1 angegeben. Die Energieversorgungseinheit des Feldgerätes umfasst ein Solarmodul zur Erzeugung von elektrischer Energie für das Feldgerät und ein Gehäuse zur Aufnahme der Messelektronik des Feldgeräts, wobei das Solarmodul in dem Gehäuse integriert ist. Durch die Bereitstellung eines Solarmoduls kann eine weitgehende Unabhängigkeit des Feldgeräts von einer externen Energieversorgung erreicht werden. Das Solarmodul ist hierbei in dem Gehäuse integriert, so dass keine externe Installation des Solarmoduls erforderlich ist. Vielmehr bilden Solarmodul und Gehäuse eine zusammenhängende Einheit, in welche die entsprechende Messelektronik des Messgeräts (Feldgerätes) eingebaut werden kann. Zusätzlicher Installationsaufwand ist nicht nötig.

Gemäß einem weiteren Ausführungsbeispiel der vorliegenden Erfindung weist das Gehäuse einen Hohlraum auf, wobei das Solarmodul derart eingerichtet ist, dass es in den Hohlraum integrierbar ist.

Ist der Hohlraum an die Form des zu integrierenden Solarmoduls angepasst, können zusätzliche Befestigungsmittel eingespart werden. Das Solarmodul wird einfach in den Hohlraum eingeschoben und klemmt dort fest.

Gemäß einem weiteren Ausführungsbeispiel der vorliegenden Erfindung besteht das Gehäuse zumindest teilweise aus lichtdurchlässigem Material, wobei das Solarmodul im Inneren des Gehäuses angeordnet ist.

Somit kann das Solarmodul von der Gehäusewand vor externen Beschädigungen geschützt werden. Hierbei kann es sich beispielsweise um rein mechanische Beschädigungen handeln, oder aber auch um chemische oder temperaturbedingte Beschädigungen, die von der schützenden Gehäusewand verhindert werden. Durch die zumindest teilweise lichtdurchlässige Ausführung des Gehäuses wird gewährleistet, dass stets ausreichend Sonnenlicht zum Solarmodul vordringen kann.

Gemäß einem weiteren Ausführungsbeispiel der vorliegenden Erfindung umfasst die Energieversorgungseinheit weiterhin ein Feldgerätedisplaymodul zum Anzeigen von Messwerten, wobei das Feldgerätedisplaymodul als Flüssigkristalldisplay ausgeführt ist und wobei das Solarmodul auf der Rückseite des Feldgerätedisplaymoduls angeordnet ist.

Ein Feldgerätedisplaymodul kann zur Anzeige ein LC-Display (Liquid Crystal Display, Flüssigkristalldisplay) verwenden. Ein solches Display kann in Form eines Bildschirms ausgeführt sein, bei dem spezielle Flüssigkristalle genutzt werden, welche die Polarisationsrichtung von Licht beeinflussen können, um Licht in bestimmten Winkeln ablenken zu können. Durch punktweises Ansteuern der Flüssigkristalle kann an den angesteuerten Stellen ein Bildpunkt sichtbar gemacht werden. Aus vielen dieser Bildpunkte kann beispielsweise ein Zahlenwert eines Messwertes dargestellt werden.

Bei einer solchen Messwertanzeige sind in der Regel etwa 60 % der Pixel hell und das Display somit zumindest zu 60 % durchsichtig. Auf diese Weise ist gewährleistet, dass stets genügend Sonnenlicht das Solarmodul erreichen kann.

Durch die Anbringung des Solarmoduls direkt hinter dem Feldgerätedisplaymodul wird eine kompakte Baugruppe bereitgestellt, welche einfach in das Gehäuse integriert werden kann.

Gemäß einem weiteren Ausführungsbeispiel der vorliegenden Erfindung umfasst das Solarmodul eine Vielzahl an Solarzellen, wobei das Gehäuse durch die Solarzellen ausgebildet ist.

In anderen Worten sind so viele Solarzellen in das Gehäuse integriert, dass das Gehäuse tatsächlich im Wesentlichen nur noch aus den einzelnen Solarzellen besteht. Auf diese Weise kann die Energieerzeugungsrate der Energieversorgungseinheit maximiert werden. Gemäß einem weiteren Ausführungsbeispiel der vorliegenden Erfindung ist das Solarmodul als Vergussteil ausgebildet.

Das Solarmodul kann als Baugruppe in ein Harz oder in einen Kunststoff eingegossen werden. Das Eingießen kann der Baugruppe eine vorgebbare Außenkontur verleihen und kann die Baugruppe robust gegen mechanische Einwirkungen machen.

Gemäß einem weiteren Ausführungsbeispiel der vorliegenden Erfindung ist das Solarmodul in das Gehäuse eingegossen.

Solarmodul und Gehäuse bilden somit ein zusammenhängendes Bauteil aus, welches werkseitig je nach Anforderung (z. B. dem Energiebedarf das Feldgeräts oder den Abmessungen des Feldgeräts) konfektionierbar ist.

Weiterhin kann das Gehäuse einen Gehäusedeckel aufweisen, in welchen das Solarmodul eingegossen ist oder an welchen das Solarmodul angeschraubt oder anderweitig befestigt ist.

Gemäß der vorliegenden Erfindung weist die Energieversorgungseinheit weiterhin einen Energiespeicher zum Puffern der vom Solarmodul erzeugten elektrischen Energie auf.

Beispielsweise kann es vorkommen, dass das Feldgerät nicht ununterbrochen in Betrieb ist, oder dass die vom Feldgerät benötigte Energie geringer ist als die vom Solarmodul bereitgestellte Energiemenge. Auch kann das Feldgerät an eine externe Energieversorgung angeschlossen sein (beispielsweise an eine 4 bis 20 mA 2-Leiterschleife). Bei der Regelung eines 4 bis 20 mA Signals kann ein zusätzlicher Strom anfallen, der nicht von der Messschaltung des Feldgeräts für die Messaufgabe genutzt wird. Dieser Strom kann dann zum Laden des Energiespeichers eingesetzt werden.

Ein Energiespeicher mit einer entsprechenden Laderegelung bzw. einem entsprechenden Energiemanagement kann es erlauben, Energie zu einem Zeitpunkt, in welchem überschüssige Energie vorhanden ist, zu speichern und die gespeicherte Energie zu einem späteren Zeitpunkt zum Betrieb des Feldgeräts zur Verfügung zu stellen. Dabei kann die Kapazität des Energiespeichers an die vom Feldgerät benötigte Leistung angepasst sein.

Gemäß einem weiteren Ausführungsbeispiel der vorliegenden Erfindung ist das Solarmodul zur Bereitstellung der gesamten vom Feldgerät benötigten Energiemenge ausgeführt, so dass keine weitere Energieversorgung erforderlich ist.

Hierdurch wird ein autarker, unabhängiger Betrieb des Feldgeräts gewährleistet.

Gemäß einem weiteren Ausführungsbeispiel der vorliegenden Erfindung umfasst die Energieversorgungseinheit weiterhin ein Messbus-Leitungssystem, welches aus einem 2-Leiter HART® Bussystem, einem 4-Leiter HART® Bussystem, , einem SDI-12, einem Profibus Bussystem oder einem Fieldbus Foundation Bussystem besteht.

Die Energieversorgungseinheit kann folglich zusätzliche Leistung über ein separates Leitungssystem beziehen, wodurch sichergestellt werden kann, dass stets ausreichend Leistung für den Betrieb des Feldgeräts vorhanden ist. Ein mögliches System, bei dem eine Trennung der Stromversorgung und der Messsignale stattfinden kann, kann das 4-Leiter HART® Bussystem sein.

Die Energieversorgungseinheit dient hier als Unterstützung der Energieversorgung des Feldgerätes beispielsweise über eines der oben genannten Messbus-Leitungssysteme. Dadurch kann die Leistungsfähigkeit des Feldgeräts erhöht werden, zum Beispiel durch Erhöhung der Messrate.

Die zusätzliche Energie der Energieversorgungseinheit kann aber auch zwischengespeichert werden und in Zeiten höheren Energiebedarfs abgerufen werden.

Anders ausgedrückt ist somit eine dauerhafte oder zeitlich begrenzte Steigerung der Leistungsfähigkeit des Feldgeräts möglich.

Gemäß einem weiteren Ausführungsbeispiel der vorliegenden Erfindung weist das Solarmodul eine Klebeseite auf, wobei die Klebeseite derart eingerichtet ist, dass das Solarmodul mittels der Klebeseite an dem Gehäuse befestigbar ist.

Auf diese Weise wird eine einfache und sichere Befestigung des Solarmoduls an dem Gehäuse ermöglicht.

Weiterhin kann die Form des Solarmoduls an die Form des Feldgerätedisplaymoduls angepasst sein, so dass das Solarmodul passgenau und sehr eng an dem Feldgerätedisplaymodul anliegend angekoppelt werden kann. Durch den engen Kontakt zwischen Feldgerätedisplaymodul und Solarmodul können Lichtverluste durch Streuung an dem Übergangsbereich zwischen Display und Solarmodul minimiert werden.

Gemäß einem Ausführungsbeispiel der vorliegenden Erfindung umfasst die Energieversorgungseinheit weiterhin eine Steuer- oder Regeleinheit zum Steuern oder Regeln einer von extern zugeführten Energiemenge.

Weiterhin kann die Steuer- oder Regeleinheit zum Steuern oder Regeln des Energiebedarfs des Feldgeräts ausgeführt sein.

Beispielsweise kann die Messrate des Feldgeräts je nach zur Verfügung stehender Energiemenge eingestellt werden.

Insbesondere in Kombination mit einem internen Energiespeicher ist somit ein effektives Energiemanagement möglich, welches einen autarken Betrieb des Feldgeräts ermöglicht, ohne dass über einen externen Anschluss elektrische Energie zugeführt werden muss.

Gemäß der vorliegenden Erfindung ist ein Feldgerät angegeben, umfassend eine oben beschriebene Energieversorgungseinheit.

Hierbei handelt es sich um ein Füllstandmessgerät oder ein Druckmessgerät. Ein solches Füllstandmessgerät kann zum Beispiel als Radar-Füllstandmessgerät, TDR-Füllstandmessgerät, Ultraschall-Füllstandmessgerät, Mikrowellen-Füllstandmessgerät, ein Druckmessgerät, Kapazitiv-Grenzstandmessgerät oder Vibration-Grenzstandmessgerät ausgeführt sein.

Weiterhin ist die Verwendung einer oben beschriebenen Energieversorgungseinheit für ein Feldgerät zum Messen eines Drucks oder eines Füllstandes angegeben.

Gemäß einem weiteren Ausführungsbeispiel der vorliegenden Erfindung ist ein Verfahren zur Energieversorgung für ein Feldgerät zum Messen eines Drucks oder eines Füllstandes angegeben, bei welchem elektrische Energie für das Feldgerät durch ein Solarmodul, das in einem Gehäuse des Feldgeräts integriert ist, erzeugt wird.

Eine externe Energieversorgung mit elektrischer Energie ist somit nicht mehr erforderlich. Weitere Ausführungsbeispiele und Vorteile der Erfindung ergeben sich aus den Unteransprüchen.

### Kurze Beschreibung der Zeichnungen

Im Folgenden werden mit Verweis auf die Figuren bevorzugte Ausführungsbeispiele der vorliegenden Erfindung beschrieben.
Fig. 1 zeigt eine schematische Darstellung einer Energieversorgungseinheit gemäß einem Ausführungsbeispiel der vorliegenden Erfindung.
Fig. 2 zeigt eine Darstellung eines Feldgeräts mit Energieversorgungseinheit gemäß einem Ausführungsbeispiel der vorliegenden Erfindung.
Fig. 3 zeigt eine schematische Darstellung eines Füllstandradars mit Energieversorgungseinheit gemäß einem Ausführungsbeispiel der vorliegenden Erfindung.
Fig. 4 zeigt ein Feldgerät gemäß einem weiteren Ausführungsbeispiel der vorliegenden Erfindung.

Die Darstellungen in den Figuren sind schematisch und nicht maßstäblich.

### Detaillierte Beschreibung von exemplarischen Ausführungsformen

In der folgenden Figurenbeschreibung werden für die gleichen oder ähnlichen Elemente die gleichen Bezugsziffern verwendet.

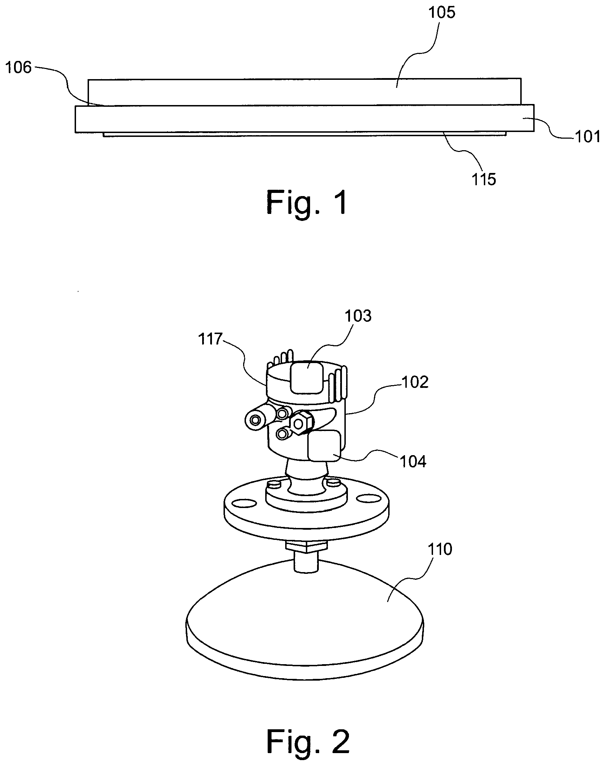

Fig. 1 zeigt eine schematische Darstellung einer Energieversorgungseinheit gemäß einem Ausführungsbeispiel der vorliegenden Erfindung. Die Energieversorgungseinheit umfasst ein Solarmodul 101, welches über eine Befestigungsfläche 106 mit einem Messgerätedisplaymodul 105 verbunden ist. Die Verbindung kann hier beispielsweise in Form einer Verklebung erfolgen. Auch ist es möglich, dass Solarmodul 101 und Display 105 miteinander im Gehäuse (nicht dargestellt in Fig. 1) der Energieversorgungseinheit eingegossen oder eingeklebt sind.

Auf der Rückseite des Solarmoduls 101 ist eine Heizfolie 115 angebracht, welche das Solarmodul und/oder das Display 105 auf Betriebstemperatur bringen kann. Die Heizfolie 115 kann auch derart ausgeführt sein, dass sie Display 105 und/oder Solarmodul 101 vor Vereisung schützt oder ein Beschlagen des Displays 105 verhindert.

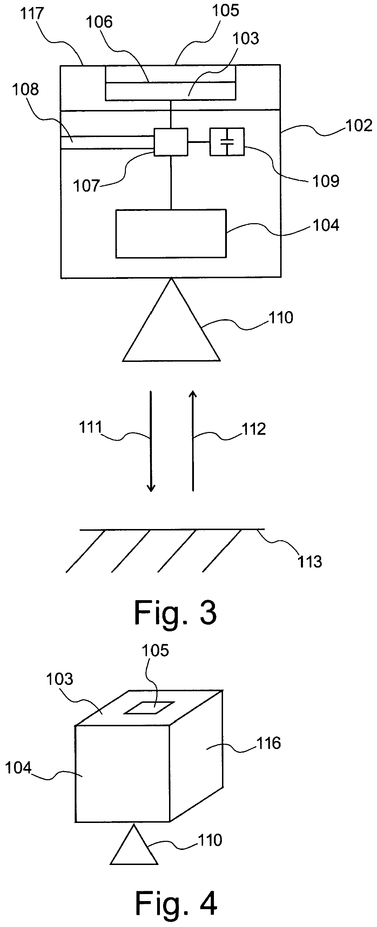

Hierfür kann die Heizfolie 115 entsprechend bedarfsweise aktiviert werden, beispielsweise durch einen Handschalter oder automatisch durch eine entsprechende Regelelektronik 107 (siehe Fig. 3).

Display 105, Solarmodul 101 und Heizfolie 115 können als Gesamtmodul hergestellt werden und dann in ein entsprechendes Gehäuse integriert werden, um die Energieversorgungseinheit auszubilden.

Auf diese Weise wird die Energieversorgung eines Füllstand- oder Druckmesstechniksensors unterstützt oder gar ersetzt.

Durch die Installation des Solarmoduls 101 hinter dem Flüssigkristalldisplay 105 ist einerseits das Solarmodul nach außen hin geschützt und beansprucht andererseits keine eigene Installationsfläche auf der Gehäuseoberseite. Hierdurch wird letztendlich Platz auf der Gehäusefläche eingespart.

Fig. 2 zeigt ein Füllstandmessgerät mit einem Gehäuse 102 und einer Antenne 110. Die Antenne 110 ist im Ausführungsbeispiel der Fig. 2 als Parabolantenne ausgebildet. Es sind aber auch andere Antennenformen möglich. Das Gehäuse 102 des Füllstandsensors weist hierbei einen Gehäusedeckel 117 auf, in welchen ein erstes Solarmodul 103 in Form einer einzelnen Solarzelle integriert ist. Beispielsweise kann das Solarmodul 103 in den Sensordeckel 117 eingegossen oder mit diesem verschraubt sein.

Ein weiteres Solarmodul 104, auch hier in Form einer einzelnen Solarzelle, ist in die Gehäusewand eingelassen. Im Extremfall können so viele Solarzellen in dem Gehäuse 102 eingebettet sein, dass das Gehäuse im Wesentlichen nur noch aus diesen Solarzellen besteht (die dann zu einem Gesamtmodul zusammengefasst werden können). Beispielsweise kann jede einzelne Solarzelle 103, 104 als Vergussteil ausgebildet sein. Die Vergussteile können dann zu einem entsprechenden Gehäuse zusammengesetzt werden. Fig. 3 zeigt ein weiteres Ausführungsbeispiel der vorliegenden Erfindung in Gestalt eines Füllstandradars. Das Füllstandradar weist hierbei ein Gehäuse 102 auf, welches die Sende- und Empfangselektronik aufnimmt. Weiterhin ist eine Antenne 110 vorgesehen, welche zum Aussenden eines Sendesignals 110 und zum Empfangen eines an einer Füllgutoberfläche 113 reflektierten Empfangssignals 112 ausgeführt ist.

In dem Deckel 117 des Gehäuses 102 sind ein Display 105 und eine Solarzelle 103 integriert. Weiterhin ist eine zweite Solarzelle 104 in der Gehäusewand integriert. Beide Solarzellen 103, 104 sind über entsprechende Leitungen an eine elektronische Steuereinheit 107 angeschlossen, welche den Energiebedarf des Füllstandsensors steuert oder regelt.

Weiterhin ist ein 2-Leiteranschluss 108 vorgesehen, mit welchem der Füllstandsensor an eine 2-Leiterschleife angeschlossen werden kann. Über diese 2-Leiterschleife sind Mess- oder Steuersignale übertragbar. Weiterhin kann über die 2-Leiterschleife eine externe Energieversorgung bereitgestellt werden.

Die elektronische Steuereinheit 107 kann hierbei den Energiebedarf des Füllstandsensors so einstellen, dass stets eine ausreichende Energieversorgung gewährleistet ist. Erfindungsgemäß kann hierfür die Abtastrate geändert werden. Weiterhin ist die elektronische Steuereinheit 107 in der Lage, Spitzen im Energiebedarf des Füllstandsensors auszugleichen, indem etwa der Energiespeicher 109 hinzugeschaltet wird, oder beispielsweise Energie von außerhalb (über die 2-Leiterschleife) hinzugezogen wird. Allerdings ist eine solche externe Energieversorgung nicht erforderlich, wenn die erfindungsgemäße Energieversorgungseinheit entsprechend dimensioniert ist, wenn also genügend Solarzellen zur Verfügung stehen und / oder wenn der Energiespeicher 109, der als Energiepuffer eingesetzt wird, über ausreichende Speicherkapazität verfügt. Bei dem Energiespeicher 109 kann es sich beispielsweise um einen Akkumulator oder einen anderen geeigneten Speicher handeln.

Fig. 4 zeigt eine schematische Darstellung eines Messgeräts gemäß einem weiteren Ausführungsbeispiel der vorliegenden Erfindung, bei welchem das Gehäuse im Wesentlichen aus den Solarzellen 103, 104, 116 (und weiteren, in der Fig. 4 nicht zu sehenden rückseitigen Solarzellen) besteht. Weiterhin ist ein Display 105 vorgesehen. Im Inneren des Gehäuses befindet sich die Elektronik.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Feldgerät, das ausgewählt ist aus der Gruppe bestehend aus Füllstandsmessgerät und Druckmessgerät, ferner umfassend eine Energieversorgungseinheit, die Energieversorgungseinheit umfassend:
ein Solarmodul (101, 103, 104) zur Erzeugung von elektrischer Energie für das Feldgerät;
einen Energiespeicher (109) zum Puffern einer vom Solarmodul (101, 103, 104) erzeugten elektrischen Energie;
ein Gehäuse (102) zur Aufnahme der Messelektronik des Feldgeräts;
eine Steuer- oder Regeleinheit (107);
wobei das Solarmodul (101, 103, 104) in dem Gehäuse (102) integriert ist;
wobei die Steuer- oder Regeleinheit (107) zum Steuern oder Regeln eines Energiebedarfs des Feldgeräts durch Einstellung der Messrate des Feldgeräts je nach zur Verfügung stehender Energiemenge ausgeführt ist; und
wobei die Steuer- oder Regeleinheit (107) zum Ausgleich von Spitzen im Energiebedarf des Feldgeräts durch Hinzuschalten des Energiespeichers (109) ausgeführt ist.

2. Feldgerät nach Anspruch 1,
wobei das Gehäuse (102) zumindest teilweise aus lichtdurchlässigem Material besteht; und
wobei das Solarmodul (101, 103, 104) im Inneren des Gehäuses angeordnet ist.

3. Feldgerät nach einem der vorhergehenden Ansprüche, weiterhin umfassend:
ein Feldgerätedisplaymodul (105) zum Anzeigen von Messwerten und als Flüssigkristalldisplay ausgeführt;
wobei das Solarmodul (101, 103, 104) auf der Rückseite des Feldgerätedisplaymoduls (105) angeordnet ist.

4. Feldgerät nach einem der vorhergehenden Ansprüche,
wobei das Solarmodul (101, 103, 104) eine Vielzahl an Solarzellen (101, 103, 104) umfasst; und
wobei das Gehäuse (102) durch die Solarzellen ausgebildet ist.

5. Feldgerät nach einem der vorhergehenden Ansprüche,
wobei das Solarmodul (101, 103, 104) als Vergussteil ausgebildet ist.

6. Feldgerät nach einem der vorhergehenden Ansprüche,
wobei das Solarmodul (101, 103, 104) zur Bereitstellung der gesamten vom Feldgerät benötigten Energiemenge ausgeführt ist, so dass keine weitere Energieversorgung erforderlich ist.

7. Feldgerät nach einem der vorhergehenden Ansprüche, weiterhin umfassend:
eine zusätzliche Versorgungsleitung oder ein Messbus-Leitungssystem;
wobei das Solarmodul (101, 103, 104) zur Unterstützung der Energieversorgung des Feldgerätes ausgeführt ist.

8. Feldgerät nach einem der vorhergehenden Ansprüche, wobei die Steuer- oder Regeleinheit (107) zum Steuern oder Regeln einer von extern zugeführten Energiemenge ausgeführt ist.

9. Feldgerät nach einem der vorhergehenden Ansprüche, wobei das Feldgerät ausgewählt ist aus der Gruppe bestehend aus HART® 2-Leiterfeldgerät, HART® 4-Leiterfeldgerät, 4 bis 20 mA Feldgerät, Profibus Feldgerät, SDI-12 Feldgerät und Fieldbusfoundation Feldgerät.

10. Verfahren zur Energieversorgung für ein Feldgerät, das ausgewählt ist aus der Gruppe bestehend aus Füllstandsmessgerät und Druckmessgerät, das Verfahren umfassend die Schritte:
Erzeugung von elektrischer Energie für das Feldgerät durch ein Solarmodul (101, 103, 104), das in einem Gehäuse (102) des Feldgeräts integriert ist;
Puffern einer vom Solarmodul (101, 103, 104) erzeugten elektrischen Energie;
Steuern oder Regeln eines Energiebedarfs des Feldgeräts, indem eine Messrate des Feldgeräts je nach zur Verfügung stehender Energiemenge eingestellt wird;
Ausgleichen von Spitzen im Energiebedarf des Feldgeräts durch Hinzuschalten des Energiespeichers (109).

## Claims

1. A field device, selected from a group consisting of a level gauge and a pressure gauge, further comprising a power supply unit, the power supply unit comprising:
a solar module (101, 103, 104) for generating electrical energy for the field device,
an energy storage (109) for buffering electrical energy generated by the solar module (101, 103, 104),
a housing (102) to accommodate the measuring electronics of the field device,
a control or regulating unit (107),
wherein the solar module (101, 103, 104) is integrated in the housing (102),
wherein the control or regulating unit (107) is adapted to control or regulate a power requirement of the field device by adjusting the measuring rate of the field device depending on the amount of energy available,
wherein the control or regulating unit (107) is adapted to compensate for peaks in the energy requirement of the field device by connecting the energy storage device (109).

2. The field device of claim 1,
wherein the housing (102) consists at least partially of translucent material, and
wherein the solar module (101, 103, 104) is arranged inside the housing.

3. The field device of any one of the preceding claims, further comprising:
a field device display module (105) for displaying measured values and configured as a liquid crystal display;
wherein the solar module (101, 103, 104) is arranged on the rear side of the field device display module (105).

4. The field device of any one of the preceding claims,
wherein said solar module (101, 103, 104) comprises a plurality of solar cells (101, 103, 104), and
wherein said housing (102) is formed by said solar cells.

5. The field device of any one of the preceding claims,
wherein the solar module (101, 103, 104) is formed as a cast component.

6. The field device of any one of the preceding claims,
wherein the solar module (101, 103, 104) is adapted to provide the entire amount of energy required by the field device, so that no further power supply is required.

7. The field device of any one of the preceding claims, further comprising:
an additional supply line or a measuring bus line system,
wherein the solar module (101, 103, 104) is adapted to support the power supply of the field device.

8. The field device of any one of the preceding claims,
wherein the control or regulating unit (107) is adapted to control or regulate an amount of energy supplied from an external source.

9. The field device of any one of the preceding claims,
wherein the field device is selected from the group consisting of HART® 2-wire field device, HART® 4-wire field device, 4 to 20 mA field device, Profibus field device, SDI-12 field device and Fieldbusfoundation field device.

10. A power supply method for a field device selected from a group consisting of a level gauge and a pressure gauge, the method comprising the steps of:
generating electrical energy for the field device by a solar module (101, 103, 104) integrated in a housing (102) of the field device,
buffering electrical energy generated by the solar module (101, 103, 104),
controlling or regulating a power requirement of the field device by setting a measurement rate of the field device depending on the amount of energy available,
compensating peaks in the energy demand of the field device by connecting the energy storage device (109).

## Revendications

1. Équipement de terrain, sélectionné parmi le groupe constitué par les appareils de mesure de remplissage et les appareils de mesure de pression, comprenant en outre une unité d'alimentation en énergie, l'unité d'alimentation en énergie comprenant :
un module solaire (101, 103, 104) pour la production d'énergie électrique pour l'équipement de terrain ;
un accumulateur d'énergie (109) pour tamponner une énergie électrique produite par le module solaire (101, 103, 104) ;
un boîtier (102) pour loger l'électronique de mesure de l'équipement de terrain ;
une unité de commande ou de régulation (107) ;
dans lequel le module solaire (101, 103, 104) est intégré dans le boîtier (102) ;
dans lequel l'unité de commande ou de régulation (107) est réalisée pour commander ou réguler une consommation d'énergie de l'équipement de terrain par réglage de la fréquence de mesure de l'équipement de terrain selon la quantité d'énergie disponible ; et
dans lequel l'unité de commande ou de régulation (107) est réalisée pour compenser des pics de consommation d'énergie de l'équipement de terrain par mise en circuit de l'accumulateur d'énergie (109).

2. Équipement de terrain selon la revendication 1,
dans lequel le boîtier (102) est constitué au moins partiellement d'un matériau translucide ; et
dans lequel le module solaire (101, 103, 104) est agencé à l'intérieur du boîtier.

3. Équipement de terrain selon l'une des revendications précédentes, comprenant en outre :
un module d'affichage d'équipement de terrain (105) pour afficher les valeurs de mesure et est réalisé comme affichage à cristaux liquides ;
dans lequel le module solaire (101, 103, 104) est agencé sur la face arrière du module d'affichage d'équipement de terrain (105).

4. Équipement de terrain selon l'une des revendications précédentes,
dans lequel le module solaire (101, 103, 104) comprend une pluralité de cellules solaires (101, 103, 104) ; et
dans lequel le boîtier (102) est formé par les cellules solaires.

5. Équipement de terrain selon l'une des revendications précédentes,
dans lequel le module solaire (101, 103, 104) est formé comme pièce moulée.

6. Équipement de terrain selon l'une des revendications précédentes,
dans lequel le module solaire (101, 103, 104) est réalisé pour fournir la totalité de la quantité d'énergie requise par l'équipement de terrain, de sorte qu'aucune alimentation supplémentaire en énergie n'est nécessaire.

7. Équipement de terrain selon l'une des revendications précédentes, comprenant en outre :
une ligne d'alimentation supplémentaire ou un système de ligne de bus de mesure ;
dans lequel le module solaire (101, 103, 104) est réalisé pour assister l'alimentation en énergie de l'équipement de terrain.

8. Équipement de terrain selon l'une des revendications précédentes, dans lequel l'unité de commande ou de régulation (107) est réalisée pour commander ou réguler une quantité d'énergie amenée de l'extérieur.

9. Équipement de terrain selon l'une des revendications précédentes, dans lequel l'équipement de terrain est sélectionné parmi le groupe constitué par les équipements de terrain HART® à 2 fils, les équipements de terrain HART® à 4 fils, les équipements de terrain de 4 à 20 mA, les équipements de terrain Profibus, les équipements de terrain SDI-12 et les équipements de terrain Fieldbusfoundation.

10. Procédé d'alimentation en énergie pour un équipement de terrain, lequel est sélectionné parmi le groupe constitué par les appareils de mesure de remplissage et les appareils de mesure de pression, le procédé comprenant les étapes :
production d'énergie électrique pour l'équipement de terrain par un module solaire (101, 103, 104), lequel est intégré dans un boîtier (102) de l'équipement de terrain ;
tamponnage d'une énergie électrique produite par le module solaire (101, 103, 104) ;
commande ou régulation d'une consommation d'énergie de l'équipement de terrain, une fréquence de mesure de l'équipement de terrain étant paramétrée en fonction de la quantité d'énergie disponible ;
compensation de pics de consommation d'énergie par mise en circuit de l'accumulateur d'énergie (109).
